# EUROPÄISCHE PATENTSCHRIFT

(11) **EP 1 962 658 B1**
(45) Veröffentlichungstag und Bekanntmachung des Hinweises auf die Patenterteilung: **15.02.2012**
(21) Anmeldenummer: 06830370.0
(22) Anmeldetag: 05.12.2006
(51) Int. Cl.: A47J 43/07

(54) **GEFÄSS MIT FUSSELEMENT**
VESSEL WITH BASE ELEMENT
CUVE À ÉLÉMENT DE BASE

(30) Priorität: 16.12.2005 DE 102005060372
(43) Veröffentlichungstag der Anmeldung: 03.09.2008
(73) Patentinhaber: BSH Bosch und Siemens Hausgeräte GmbH, 81739 München (DE)
(72) Erfinder: BLAGOTINSEK, Andrej, 2380 Slovenj Gradec (SI); PESEC, Jurij, 3301 Petrovce (SI); POGACAR, Toni, 3311 Sempeter (SI); SABEC, Roman, 3327 Smartno (SI)
(86) Internationale Anmeldenummer: PCT/EP2006/069320
(87) Internationale Veröffentlichungsnummer: WO 2007/068627

(56) Entgegenhaltungen:
- WO-A-2004/058021
- FR-A1- 2 773 977

## Beschreibung

Die Erfindung betrifft ein Gefäß mit einer Bodenöffnung, und mit einem Fußelement zum Verschließen der Bodenöffnung.

Die bleibende Anbindung eines speziell ausgebildeten, beispielsweise aus Kunststoff gefertigten Fußelementes mit einem insbesondere aus Glas oder Metall gefertigten Korpus ist in der Praxis mit großen Schwierigkeiten verbunden, da an Glas- bzw. Metallteilen Kunststoffelemente nur schwer irreversibel fixierbar sind. An sich bekannte Aufschraublösungen haben den Nachteil, dass sie sich während des Gebrauchs wieder lösen, also keine dauerhafte Fixierung gewährleisten, welche jedoch zweckbedingt unumgänglich ist. Die WO 2004/058021 A1 offenbart eine Becheranordnung mit einem Becherträger, der mittels einer Verbindungseinrichtung an einem Becher montierbar ist.

Zur Fixierung eines speziell ausgebildeten Kunststofffußes an einen insb. aus Glas gefertigten Korpus ist bereits bekannt, am Gewindefuß des Glasbehälters ein elastisches Zwischenstück aufzusetzen, welches auf der Außenseite durch einen zweigeteilten Kunststoffring verstärkt wird. Anschließend werden die so vormontierten Elemente in ein Unterteil eingeschraubt, wobei sich ein Formschluss ausbildet, welcher eine gute Sicherung gegen Verdrehen gewährleistet.

Diese Lösung jedoch in der Handhabung kompliziert ist und hat insoweit einen verhältnismäßig hohen Montageaufwand zum Nachteil.

Diesen Nachteil sucht die vorliegende Erfindung zu vermeiden. Ihr liegt daher die Aufgabe der Erfindung zugrunde, bei leichterer Montage gleichwohl eine dauerhafte Fixierung eines speziell ausgebildeten Kunststofffußes an einen insb. aus Glas gefertigten Korpus zu gewährleisten.

Diese Aufgabe wird erfindungsgemäß durch ein Gefäß mit den Merkmalen gemäß Anspruch 1 gelöst. Vorteilhafte Aus- und Weiterbildungen, welchen einzeln oder in Kombination miteinander eingesetzt werden können, sind Gegenstand der abhängigen Ansprüche.

Ein Gefäß nach der Erfindung baut auf gattungsgemäßen Gefäßen mit einer Bodenöffnung, welche mit einem Fußelement verschließbar ist, dadurch auf, dass das Fußelement einen Haltering umfasst, an welchem wenigstens abschnittsweise Rastfedern ausgebildet sind, die mit am Gefäß wenigstens abschnittsweise ausgebildeten Rastnuten zusammenwirken und das Fußelement zum Gefäß bezüglich einer ersten Raumrichtung fixiert, wobei die erste Raumrichtung als eine zu der durch die Bodenöffnung gebildeten Fläche senkrecht stehenden Achse (y) definiert ist, und wobei wenigstens ein weiteres Mittel vorgesehen ist, welches das Fußelement zum Gefäß bezüglich der verbleibenden Raumrichtungen fixiert.

Beispielsweise weist in einer ersten Ausgestaltung der Erfindung von Gefäß und Fußelement das eine wenigstens eine Rastfeder und das andere wenigsten eine Rastnut oder umgekehrt auf, wobei Rastfeder und Rastnut das Fußelement zum Gefäß bezüglich der verbleibenden Raumrichtungen fixiert.

Alternativ oder kumulativ hierzu sind die am Gefäß ausgebildeten Rastnuten in Gestalt eines Gewindeganges ausgebildet.

Erfindungsgemäß sind die am Haltering ausgebildeten Rastfedern in Gestalt eines Gewindeganges ausgebildet.

Erfindungsgemäß sind die Gewindegänge derart zueinander korrespondierend ausgebildet, dass wenigstens ein gewindefreier Abschnitt verbleibt.

Zwecks Ausbildung einer definierten Winkellage ist erfindungsgemäß auf Höhe des gewindefreien Abschnitts im Haltering zusätzlich eine Nische ausgebildet.

Erfindungsgemäß ist in die Nische ein Sicherungsmittel einsetzbar.

Zweckmäßiger weise weisen von Sicherungsmittel und Nische das eine wenigstens eine Sicherungsfeder und das andere wenigsten eine Sicherungsnut oder umgekehrt auf, was ein etwaiges Herausfallen des Sicherungsmittels vorteilhaft verhindert.

Die vorliegende Erfindung eignet sich insbesondere für aus Glas oder Metall gefertigte Mixer bzw. Mixeraufsätze moderner Kompakt-Küchenmaschinen.

Weitere Vorteile und Ausgestaltungen der vorliegenden Erfindung werden nachfolgend anhand eines bevorzugten Ausführungsbeispieles sowie der beigeschlossenen Zeichnung beschrieben.

Darin zeigen schematisch:
- Fig. 1: ein Glasgefäß mit einem aus Kunststoff gefertigten Fußelement in einer perspektivischen Darstellung;
- Fig. 2: das Gefäß nach Fig. 1 in einer Draufsicht; und
- Fig. 3: einen vergrößerten Ausschnitt des in Fig. 2 dargestellten Gefäßes.

Bei der nachfolgenden Beschreibung einer bevorzugten Ausführungsform der vorliegenden Erfindung bezeichnen gleiche Bezugszeichen gleiche oder vergleichbare Komponenten.

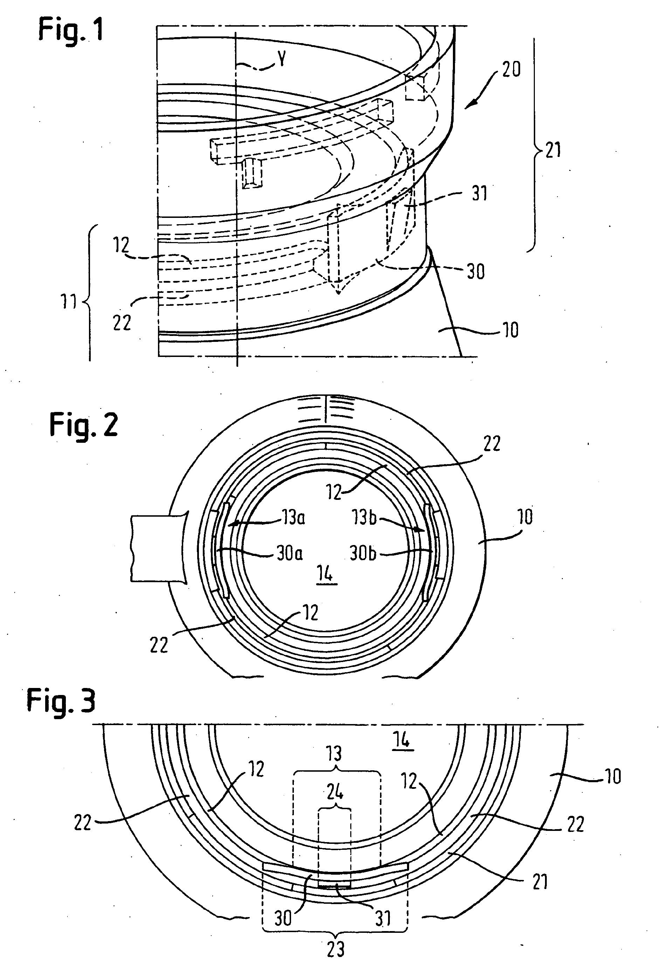

Fig. 1 zeigt in einer perspektivischen Darstellung ein Glasgefäß 10 mit einem aus Kunststoff gefertigten Fußelement 20. Das Fußelement 20 umfasst einen Haltering 21, an welchem wenigstens abschnittsweise, vorzugsweise gewindeförmige Rastfedern 22 ausgebildet sind, die mit am Glasgefäß 10 wenigstens abschnittsweise und ebenfalls bevorzugt gewindeförmig ausgebildeten Rastnuten 12 zusammenwirken. Derartig gewindeförmig ausgebildeten Rastnuten 12 und Rastfedern 22 fixieren vorteilhaft das Fußelement 20 zum Gefäß 10 bezüglich einer ersten Raumrichtung, wobei die erste Raumrichtung als eine zu der durch die Bodenöffnung 14 gebildeten Fläche senkrecht stehenden Achse (y) definiert ist.

Erfindungsgemäß bevorzugt sind die Gewindegänge 12 und 22 derart zueinander korrespondierend ausgebildet, dass wenigstens ein gewindefreier Abschnitt 13 verbleibt, auf dessen Höhe im Haltering 12 eine Nische 23 ausgebildet ist.

In diese Nische 23, welche bei einem auf den Gewindefuß 11 des Glasbehälters 10 bereits aufgeschraubten Haltering 21 deutlich erkennbar ist, wird insoweit einfach und leicht handhabbar ein Sicherungselement 30 so tief eingelegt, dass eine vorzugsweise am Sicherungselement 30 ausgebildete Sicherungsfeder 31 in eine korrespondierende, im Bereich der Nische 23 ausgebildete Sicherungsnut 24 einschnappt, wobei das Sicherungselement 30 einen Formschuss bewirkt, wodurch ein Verdrehen von Haltering 21 und Glasbehälter 10 vorteilhaft verhindert ist.

Soweit mit einem Fußelement 20 zu versehende Gefäße 10 zwei oder mehrere gewindefreie Abschnitte 13a, 13b, ... aufweisen, werden zwecks verbesserter Verdrehsicherung zwei oder mehr korrespondierend ausgebildete Sicherungselemente 30a, 30b, ... verbaut.

Die vorliegende Erfindung kommt mit verhältnismäßig wenigen Bauteilen aus, welche insbesondere einfacher zu handhaben sind, als vergleichbare, aus dem Stand der Technik bekannte Lösungen. Sie eignet sich insbesondere für aus Glas oder Metall gefertigte Mixer bzw. Mixeraufsätze moderner Kompakt-Küchenmaschinen.

### BEZUGSZEICHENLISTE

- 10: Glasbehälter
- 11: Gewindefuß des Glasbehälters 10
- 12: am Gewindefuß 10 ausgebildete Gewindegänge / Rastnuten
- 13: am Gewindefuß 10 ausgebildete Gewindefreiräüme
- 14: Bodenöffnung

- 20: Fußelement
- 21: Fußunterteil
- 22: am Unterteil 21 ausgebildete Gewindegänge / Rastfedern
- 23: im Unterteil 21 ausgebildete Nische
- 24: im Unterteil 21 ausgebildete Sicherungsnut

- 30: Sicherungselement
- 31: am Sicherungselement 30 ausgebildete Sicherungsfeder

## Patentansprüche

1. Gefäß (10) mit einer Bodenöffnung (14) und mit einem Fußelement (20), zum Verschließen der Bodenöffnung (14),
- wobei das Fußelement (20) einen Haltering (21) umfasst, an welchem wenigstens abschnittsweise Rastfedern (22) ausgebildet sind, die mit am Gefäß (10) wenigstens abschnittsweise ausgebildeten Rastnuten (12) zusammenwirken und das Fußelement (20) zum Gefäß (10) bezüglich einer ersten Raumrichtung fixiert, die als eine zu der durch die Bodenöffnung (14) gebildeten Fläche senkrecht stehenden Achse (y) definiert ist; und
- wobei wenigstens ein weiteres Mittel (30) vorgesehen ist, welches das Fußelement (20) zum Gefäß (10) bezüglich der verbleibenden Raumrichtungen fixiert, **dadurch gekennzeichnet, dass** die am Haltering (21) ausgebildeten Rastfedern (22) in Gestalt eines Gewindeganges (22) ausgebildet sind,
wobei die Gewindegänge (12, 22) derart zueinander korrespondierend ausgebildet sind, dass wenigstens ein gewindefreier Abschnitt (13) verbleibt,
wobei auf Höhe des gewindefreien Abschnitts (13) im Haltering (21) eine Nische (23) ausgebildet ist,
und wobei in die Nische (23) ein Sicherungsmittel (30) einsetzbar ist.

2. Gefäß (10) nach Anspruch 1, **dadurch gekennzeichnet, dass** von Gefäß (10) und Fußelement (20) das eine wenigstens eine Rastfeder und das andere wenigsten eine Rastnut oder umgekehrt aufweisen, so dass Rastfeder und Rastnut das Fußelement (20) zum Gefäß (10) bezüglich der verbleibenden Raumrichtungen fixiert.

3. Gefäß (10) nach Anspruch 1 oder 2, **dadurch gekennzeichnet, dass** die am Gefäß (10) ausgebildeten Rastnuten (12) in Gestalt eines Gewindeganges (12) ausgebildet sind.

4. Gefäß (10) nach Anspruch 1, **dadurch gekennzeichnet, dass** von Sicherungsmittel (30) und Nische (23) das eine wenigstens eine Sicherungsfeder (31) und das andere wenigsten eine Sicherungsnut (24) oder umgekehrt aufweisen.

5. Gefäß (10) nach einem der vorherigen Ansprüche, **gekennzeichnet durch** ein aus Glas gefertigtes Gefäß (10).

6. Gefäß nach einem der vorherigen Ansprüche, **gekennzeichnet durch** einen aus Kunststoff gefertigten Haltering (21).

## Claims

1. Vessel (10) with a base opening (14) and with a foot element (20) for closing the base opening (14),
- wherein the foot element (20) comprises a mounting ring (21) at which are formed, in at least a section, detent keys (22) which co-operate with detent grooves (12) formed at the vessel (10) in at least a section and which fix the foot element (20) to the vessel (10) with respect to a first spatial direction, which is defined as an axis (y) extending perpendicularly to the surface formed by the base opening (14); and
- wherein at least one further means (20) is provided, which fixes the foot
element (20) to the vessel (10) with respect to the remaining spatial directions, **characterised in that** the detent keys (22) formed at the mounting ring (21) are formed in the shape of a thread path (22), wherein the thread paths (12, 22) are formed to correspond with one another in such a manner that at least one thread-free section (13) remains, wherein a niche (23) is formed at the level of the thread-free section (13) in the mounting ring (21) and wherein a securing means (30) is insertable into the niche (23).

2. Vessel (10) according to claim 1, **characterised in that** of the vessel (10) and foot element (20) one has at least one detent key and the other at least one detent groove or conversely so that detent key and detent groove fix the foot element (20) to the vessel (10) with respect to the remaining spatial directions.

3. Vessel (10) according to claim 1 or 2, **characterised in that** the detent grooves (12) formed at the vessel (10) are formed in the shape of a thread path (12).

4. Vessel (10) according to claim 1, **characterised in that** of the securing means (30) and niche (23) one has at least one securing key (31) and the other at least one securing groove (24) or conversely.

5. Vessel (10) according to any one of the preceding claims, **characterised by** a vessel (10) made of glass.

6. Vessel according to any one of the preceding claims, **characterised by** a mounting ring (21) made of plastics material.

## Revendications

1. Récipient (10) doté d'une ouverture de fond (14) et d'un élément de base (20), pour la fermeture de l'ouverture de fond (14),
- l'élément de base (20) comprenant une bague de retenue (21) sur laquelle sont conçus au moins par endroits des ressorts à encliquetage (22), qui coopèrent avec des rainures d'encliquetage (12) conçues au moins par endroits sur le récipient (10) et fixent l'élément de base (20) pour le récipient (10) par rapport à une première direction dans l'espace, qui est définie comme un axe (y) disposé perpendiculairement à la surface formée par l'ouverture de fond (14); et
- au moins un autre moyen (30) étant prévu, lequel fixe l'élément de base (20) par rapport au récipient (10) en ce qui concerne les directions restantes de l'espace,
**caractérisé en ce que** les ressorts à encliquetage (22) conçus sur la bague de retenue (21) sont conçus sous forme d'un pas de filetage (22),
les pas de filetage (12, 22) étant conçus en se correspondant les uns aux autres de telle sorte qu'il reste au moins une partie (13) sans filetage,
une niche (23) étant conçue à hauteur de la partie (13) sans filetage dans la bague de retenue (21),
et un moyen d'arrêt (30) pouvant être inséré dans la niche (23).

2. Récipient (10) selon la revendication 1, **caractérisé en ce que**, du récipient (10) et de l'élément de base (20), au moins l'un d'entre eux présente un ressort à encliquetage et l'autre au moins une rainure d'encliquetage ou inversement, de sorte que le ressort à encliquetage et la rainure d'encliquetage fixent l'élément de base (20) par rapport au récipient (10) en ce qui concerne les directions restantes de l'espace.

3. Récipient (10) selon la revendication 1 ou 2, **caractérisé en ce que** les rainures d'encliquetage (12) conçues sur le récipient (10) sont conçues sous forme d'un pas de filetage (12).

4. Récipient (10) selon la revendication 1, **caractérisé en ce que**, du moyen de blocage (30) et de la niche (23), au moins l'un d'entre eux présente un ressort d'arrêt (31) et l'autre au moins une rainure d'arrêt (24) ou inversement.

5. Récipient (10) selon l'une des revendications précédentes, **caractérisé par** un récipient (10) fabriqué en verre.

6. Récipient selon l'une des revendications précédentes, **caractérisé par** une bague de retenue (21) fabriquée en matière synthétique.
